(19) Europäisches Patentamt

European Patent Office

Office européen des brevets

(11) **EP 4 579 493 A2**

(12) **EUROPEAN PATENT APPLICATION**

(43) Date of publication:
02.07.2025 Bulletin 2025/27

(21) Application number: 25172563.6

(22) Date of filing: 25.04.2025

(51) International Patent Classification (IPC):
**G06F 17/16** (2006.01)    **G06F 7/487** (2006.01)
**G06N 3/063** (2023.01)

(52) Cooperative Patent Classification (CPC):
**G06F 17/16; G06F 7/483; G06F 7/4876;
G06N 3/063**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **03.07.2024 CN 202410890045**

(71) Applicant: **KunlunXin Technology (Beijing)
Company Limited
Haidian District
Beijing 100101 (CN)**

(72) Inventors:
• **WANG, Bingnan
  Beijing, 100101 (CN)**
• **WANG, Leilei
  Beijing, 100101 (CN)**
• **SHAN, Liang
  Beijing, 100101 (CN)**
• **LI, Yupeng
  Beijing, 100101 (CN)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(54) **DATA PROCESSING APPARATUS AND METHOD, ELECTRONIC DEVICE, AND STORAGE
MEDIUM**

(57) The present disclosure provides a data processing apparatus, which relates to a field of artificial intelligence technology, and in particular to fields of chips, large models, and distributed computing platform technologies. The apparatus includes: a quantization unit configured to: quantize floating-point data to be processed into first fixed-point data according to a first maximum/minimum value corresponding to the floating-point data to be processed; and quantize second floating-point data into second fixed-point data according to a second maximum/minimum value corresponding to the floating-point data to be processed, where the second floating-point data is obtained according to the floating-point data to be processed and first floating-point data, and the first floating-point data is obtained by dequantizing the first fixed-point data; and a first computing unit configured to: obtain a first calculation result according to fixed-point data to be processed and the first fixed-point data; obtain a second calculation result according to the fixed-point data to be processed and the second fixed-point data; and obtain a target calculation result according to the first calculation result and the second calculation result. The present disclosure further provides a data processing method, an electronic device, and a storage medium.

<u>200</u>

FIG. 2

**(Cont. next page)**

<u>600</u>

Floating-point data to be processed is quantized into first fixed-point data by using a quantization unit according to a first maximum/minimum value corresponding to the floating-point data to be processed ⟋⁓ S610

Second floating-point data is quantized into second fixed-point data by using the quantization unit according to a second maximum/minimum value corresponding to the floating-point data to be processed ⟋⁓ S620

A first calculation result is obtained by using a first computing unit according to fixed-point data to be processed and the first fixed-point data ⟋⁓ S630

A second calculation result is obtained by using the first computing unit according to the fixed-point data to be processed and the second fixed-point data ⟋⁓ S640

A target calculation result is obtained by using the first computing unit according to the first calculation result and the second calculation result ⟋⁓ S650

FIG. 6

**Description**

TECHNICAL FIELD

The present disclosure relates to a field of artificial intelligence technology, and in particular to fields of chips, mixed-precision computing, and distributed computing platform technologies. More specifically, the present disclosure provides a data processing apparatus, a data processing method, an electronic device, and a storage medium.

BACKGROUND

With a development of artificial intelligence technology, application scenarios for large models are continuously expanding. During functioning of a large module, a matrix operation performed is difficult to balance performance and precision.

SUMMARY

The present disclosure provides a data processing apparatus, a data processing method, an electronic device, and a storage medium.

According to an aspect of the present disclosure, a data processing apparatus is provided, including: a quantization unit configured to: quantize floating-point data to be processed into first fixed-point data according to a first maximum/minimum value corresponding to the floating-point data to be processed; and quantize second floating-point data into second fixed-point data according to a second maximum/minimum value corresponding to the floating-point data to be processed, where the second floating-point data is obtained according to the floating-point data to be processed and first floating-point data, and the first floating-point data is obtained by dequantizing the first fixed-point data; and a first computing unit configured to: obtain a first calculation result according to fixed-point data to be processed and the first fixed-point data; obtain a second calculation result according to the fixed-point data to be processed and the second fixed-point data; and obtain a target calculation result according to the first calculation result and the second calculation result.

According to another aspect of the present disclosure, an electronic device is provided, including the apparatus provided in the present disclosure.

According to another aspect of the present disclosure, a data processing method is provided, including: quantizing, by using a quantization unit, floating-point data to be processed into first fixed-point data according to a first maximum/minimum value corresponding to the floating-point data to be processed; quantizing, by using the quantization unit, second floating-point data into second fixed-point data according to a second maximum/minimum value corresponding to the floating-point data to be processed, where the second floating-point data is obtained according to the floating-point data to be processed and first floating-point data, and the first floating-point data is obtained by dequantizing the first fixed-point data; obtaining a first calculation result according to fixed-point data to be processed and the first fixed-point data by using a first computing unit; obtaining a second calculation result according to the fixed-point data to be processed and the second fixed-point data by using the first computing unit; and obtaining a target calculation result according to the first calculation result and the second calculation result by using the first computing unit.

According to another aspect of the present disclosure, an electronic device is provided, including: at least one processor; and a memory communicatively connected to the at least one processor, where the memory stores instructions executable by the at least one processor, and the instructions, when executed by the at least one processor, are configured to cause the at least one processor to implement the method provided in the present disclosure.

According to another aspect of the present disclosure, a non-transitory computer-readable storage medium having computer instructions therein is provided, and the computer instructions are configured to cause a computer to implement the method provided in the present disclosure.

According to another aspect of the present disclosure, a computer program product containing a computer program is provided, the computer program, when executed by a processor, is configured to cause the processor to implement the method provided in the present disclosure.

It should be understood that content described in this section is not intended to identify key or important features in embodiments of the present disclosure, nor is it intended to limit the scope of the present disclosure. Other features of the present disclosure will be easily understood through the following description.

BRIEF DESCRIPTION OF THE DRAWINGS

The accompanying drawings are used for better understanding of the solution and do not constitute a limitation to the present disclosure. In the accompanying drawings:

FIG. 1A shows a schematic diagram of a data processing method according to an example;

FIG. 1B shows a schematic diagram of a data processing method according to another example;

FIG. 1C shows a schematic diagram of a data processing method according to another example;

FIG. 1D shows a schematic diagram of a data processing method according to another example;

FIG. 2 shows a schematic block diagram of a data processing apparatus according to an embodiment of the present disclosure;

FIG. 3 shows a chart of a data type conversion according to an embodiment of the present disclosure;

FIG. 4A shows a schematic block diagram of a data processing apparatus according to another embodiment of the present disclosure;

FIG. 4B shows a schematic block diagram of a data processing apparatus according to another embodiment of the present disclosure;

FIG. 4C shows a schematic block diagram of a data processing apparatus according to another embodiment of the present disclosure;

FIG. 5 shows a schematic block diagram of an electronic device according to an embodiment of the present disclosure;

FIG. 6 shows a flowchart of a data processing method according to an embodiment of the present disclosure; and

FIG. 7 shows a block diagram of an electronic device to which a data processing method may be applied according to an embodiment of the present disclosure.

DETAILED DESCRIPTION OF EMBODIMENTS

Exemplary embodiments of the present disclosure will be described below with reference to accompanying drawings, which include various details of embodiments of the present disclosure to facilitate understanding and should be considered as merely exemplary. Therefore, those ordinary skilled in the art should realize that various changes and modifications may be made to embodiments described herein without departing from the scope and spirit of the present disclosure. Likewise, for clarity and conciseness, descriptions of well-known functions and structures are omitted in the following description.

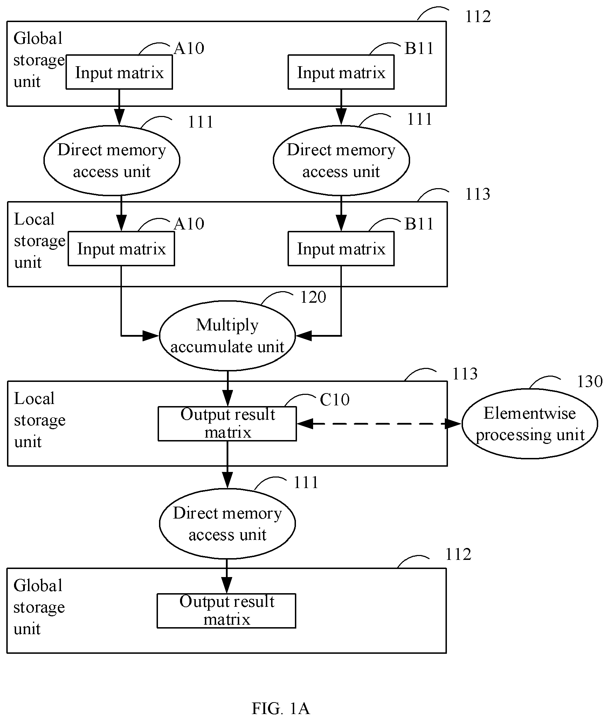

General matrix to matrix multiplication (GEMM) is one of fundamental operations involved in neural networks and is also a crucial fundamental operation for functioning of large models. The general matrix to matrix multiplication refers to a computational process of multiplying two matrices to obtain an output matrix. The matrices used as inputs of the general matrix to matrix multiplication may include a weight matrix and a data matrix, and an output result matrix is obtained after a matrix multiplication. A general computational flow of the general matrix to matrix multiplication is shown in FIG. 1A.

FIG. 1A shows a schematic diagram of a general matrix to matrix multiplication according to an embodiment of the present disclosure.

In some embodiments, functional components related to the general matrix to matrix multiplication may include a direct memory access (DMA) unit 111, a multiply accumulate (MAC) unit 120, and an elementwise (EW) processing unit 130. The direct memory access unit 111 may load or store data. When executing a load instruction, the direct memory access unit 111 may load data from a global storage unit 112 to a local storage unit 113, for example. When executing a store instruction, the direct memory access unit 111 may store data to the global storage unit 112 from the local storage unit 113, for example.

In embodiments of the present disclosure, with a development of artificial intelligence technology, the quantity of parameters of deep neural networks has increased rapidly. If floating-point storage and computation continue to be used in the general matrix to matrix multiplication, requirements for chip computing power and storage capacity may be excessively high. Therefore, quantizing floating-point data into fixed-point data to achieve higher computing power and smaller storage space has become one of mainstream means of accelerating model inference. A data type conversion may be performed by a quantization unit. For example, the quantization unit may perform cast, quant, and dequant operations according to data types.

In some embodiments, the data matrix of the general matrix to matrix multiplication may include a plurality of floating-point values in order to ensure a computational precision, and the weight matrix of the general matrix to matrix multiplication may include a plurality of fixed-point values in order to reduce storage resource usage. For example, the floating-point value may be a 16-bit floating-point value (FP16), and the fixed-point value may be an 8-bit fixed-point value (int8). As shown in FIG. 1A, an input matrix A10 may be the above-mentioned data matrix, and an input matrix B11 may be the above-mentioned weight matrix. After the multiply accumulate unit 120 performs a general matrix to matrix multiplication, an output result matrix C10 may be obtained. The elementwise processing unit 130 may process the output result matrix C (for example, by adding bias or scaling), and then the direct memory access unit 111 may write the processed output result matrix C10 to the global storage unit 114.

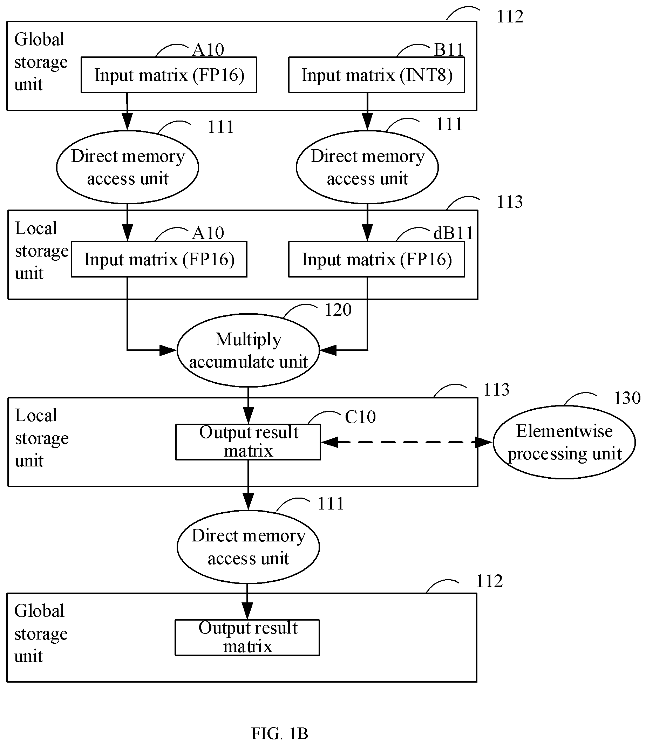

In some embodiments, the general matrix to matrix multiplication performed by the multiply accumulate unit 112 may support inputs of the same data type. If performing a general matrix to matrix multiplication on two matrices of different data types, it is possible to convert the data types of the two matrices to the same type in a loading stage. In this case, the data matrix may be quantized from floating-point numbers to fixed-point numbers, or the weight matrix may be dequantized from fixed-point numbers to floating-point numbers. Then, a general matrix to matrix multiplication may be performed using the multiply accumulate unit 112. A description will be given below with reference to FIG. 1B to FIG. 1C.

FIG. 1B shows a schematic diagram of a general matrix to matrix multiplication according to another embodiment of the present disclosure.

The input matrix A10 may include one or more 16-bit floating-point values, and the input matrix B11 may include one or more 8-bit fixed-point values. In the loading stage, the 8-bit fixed-point value of the input matrix B may be dequantized into a 16-bit floating-point value to obtain a dequantized input matrix dB11. The multiply accumulate unit 120 may compute according to the input matrix A10 and the dequantized input matrix dB11 to obtain an output result matrix C10. The elementwise processing unit 130 may process the output result matrix C10. The direct memory access unit 111 may store the processed output result matrix C10 into the global storage unit 112. However, for the input matrix B11, an 8-bit fixed-point value is read from the global storage unit 112, and a 16-bit floating-point value is written to the local storage unit 113. A data write volume is approximately twice a data read volume, so that the data write volume may reach a bandwidth bottleneck, which may slow down a loading process of the input matrix B11 and cause a negative impact on the chip performance.

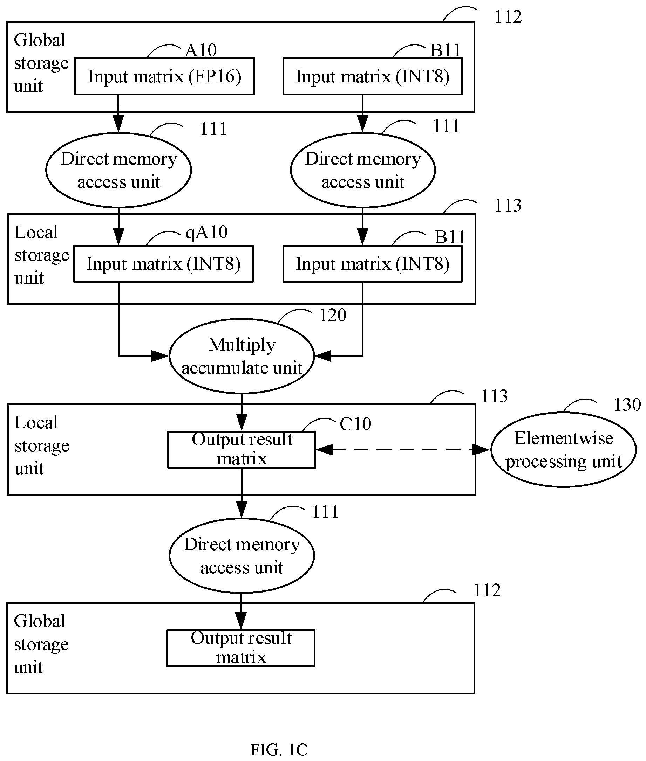

FIG. 1C shows a schematic diagram of a general matrix to matrix multiplication according to another embodiment of the present disclosure.

In some embodiments, different from the embodiments shown in FIG. 1B, the 16-bit floating-point value of the input matrix A10 may be quantized into an 8-bit fixed-point value in the loading stage. The multiply accumulate unit 120 may compute according to a quantized input matrix qA10 and the input matrix B11. The elementwise processing unit 130 may process the output result matrix C10. Then, the direct memory access unit 111 may store the processed output result matrix C into the global storage unit 114. In this case, the data write volume is unlikely to reach the bandwidth bottleneck, and a risk of performance issues is not high. However, quantizing a 16-bit floating-point value into an 8-bit fixed-point value in the loading stage may result in a loss of data precision, which in turn leads to a decrease in computational precision of the chip.

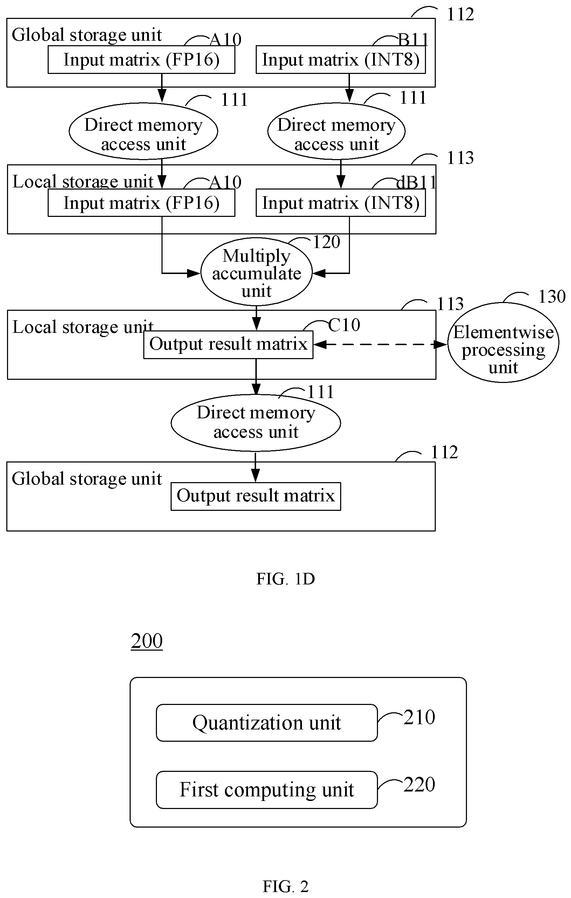

It may be understood that some methods of performing a general matrix to matrix multiplication on input matrices of different precisions based on quantization and dequantization respectively have been described above. In some embodiments, it is possible to adjust the multiply accumulate unit, which will be described below with reference to FIG. 1D.

FIG. 1D shows a schematic diagram of a general matrix to matrix multiplication according to another embodiment of the present disclosure.

In some embodiments, the multiply accumulate unit 120 may be modified to support computations on input matrices of different precisions. For example, the modified multiply accumulate unit may directly multiply the input matrix A10 by the input matrix B11. In the loading stage, the direct memory access unit 111 may directly read the input matrix A10 and/or the input matrix B11. Then, the multiply accumulate unit 120 may perform a general matrix to matrix multiplication on the input matrix A10 and the input matrix B11 to obtain an output result matrix C10. A hardware modification to the multiply accumulate unit may increase a hardware complexity, cause a high modification cost, and require a long iteration cycle.

In order to improve precision and performance of artificial intelligence chips, the present disclosure provides a data processing apparatus, which will be described below.

FIG. 2 shows a schematic block diagram of a data processing apparatus according to an embodiment of the present disclosure.

As shown in FIG. 2, a data processing apparatus 200 may include a quantization unit 210 and a first computing unit 220.

The quantization unit 210 may be used to quantize floating-point data to be processed into first fixed-point data according to a first maximum/minimum value corresponding to the floating-point data to be processed. For example, the floating-point data to be processed may be the above-mentioned input matrix A10. The input matrix A10 may include one or more 16-bit floating-point values. The first maximum/minimum value may be a predetermined value corresponding to the floating-point data to be processed, or may be determined according to a maximum/minimum value in the floating-point data to be processed. The first fixed-point data may include one or more 8-bit fixed-point values.

The quantization unit 210 may be further used to quantize second floating-point data into second fixed-point data according to a second maximum/minimum value corresponding to the floating-point data to be processed. For example, the second maximum/minimum value may be a predetermined value corresponding to the floating-point data to be processed, or may be determined based on a maximum/minimum value in the floating-point data to be processed. The second fixed-point data may include one or more 8-bit fixed-point values. For another example, the maximum/minimum value may be a maximum value, a minimum value, or a maximum absolute value.

In embodiments of the present disclosure, the second floating-point data is obtained according to the floating-point data to be processed and first floating-point data, and the first floating-point data is obtained by dequantizing the first fixed-point data.

For example, when converting floating-point data to fixed-point data, a data precision may be reduced. Therefore, when the floating-point data to be processed is quantized into the first fixed-point data, a precision of the first fixed-point data is less than that of the floating-point data to be processed. After the first fixed-point data is dequantized into floating-point data, the first floating-point data obtained may be different from the floating-point data to be processed. In this case, the first floating-point data may be used as a high-order floating-point component of the floating-point data to be processed. The second floating-point data may be obtained based on the floating-point data to be processed and the first floating-point data. The second floating-point data corresponds to a low-order floating-point component of the floating-point data to be processed. The second floating-point data may be quantized to obtain second fixed-point data.

The first computing unit 220 may be used to obtain a first calculation result according to the fixed-point data to be processed and the first fixed-point data, and obtain a second calculation result according to the fixed-point data to be processed and the second fixed-point data.

For example, the fixed-point data to be processed may be the above-mentioned input matrix B11.

For example, the first computing unit 220 may be the above-mentioned multiply accumulate unit. The first calculation result may be obtained by performing a matrix operation based on the fixed-point data to be processed and the first fixed-point data. The second calculation result may be obtained by performing a matrix operation based on the fixed-point data to be processed and the second fixed-point data. The matrix operation may include various matrix operations such as matrix multiplication, matrix addition, matrix subtraction, etc.

For another example, the first computing unit 212 may be further used to obtain a target calculation result according to the first calculation result and the second calculation result. For example, it is possible to perform addition, subtraction or multiplication on the first calculation result and the second calculation result to obtain the target calculation result.

According to embodiments of the present disclosure, a floating-point input data may be quantized into a plurality of fixed-point data using quantization or dequantization methods supported by a chip, and relevant operations may be performed on another fixed-point input data and the plurality of fixed-point data obtained by quantization, which may reduce a precision loss caused by directly converting floating-point data into fixed-point data, while maintaining the use of fixed-point data for matrix calculations. In this way, it is possible to make full use of the bandwidth and computing power of the artificial intelligence chip, and maintain the calculation precision while maintaining the chip performance.

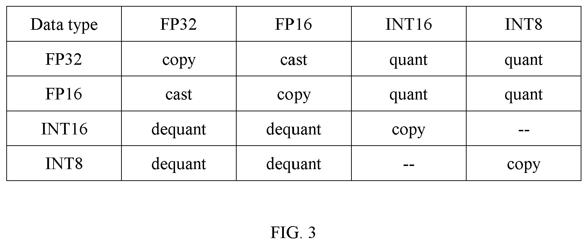

It may be understood that the data processing apparatus of the present disclosure has been described above, and the quantization unit of the present disclosure will be described below with reference to FIG. 3.

FIG. 3 shows a schematic diagram of a data precision conversion according to an embodiment of the present disclosure.

In some embodiments, the quantization unit may perform casting between floating-point values of different precisions and conversion between floating-point values and fixed-point values. As shown in FIG. 3, the quantization unit may cast a 32-bit floating-point value (FP32) into a 16-bit floating-point value, or cast a 16-bit floating-point value into a 32-bit floating-point value.

In embodiments of the present disclosure, the quantization may be performed according to a floating-point value to be quantized, a target maximum value corresponding to a fixed-point value obtained by quantization, and a maximum/minimum value corresponding to the floating-point value to be quantized to obtain a fixed-point value. For example, a floating-point value may be quantized to a fixed-point value by Equation (1):

$$quant\_value = \frac{value\_f \times int\_max}{max\_value\_general} \qquad \text{Equation (1)}$$

where *quant value* may represent a fixed-point value obtained by quantization, *value_f* may represent a floating-point value to be quantized, and *int max* may represent a target maximum value. The fixed-point value obtained by quantization may correspond to a target precision, and the target maximum value may be a maximum value representable by the target precision. *max value _general* may represent a maximum/minimum value corresponding to the floating-point value to be quantized. The maximum/minimum value may be a predetermined value, or may be determined according to a maximum/minimum value in a plurality of floating-point values to be quantized. As shown in FIG. 3, the quantization unit may quantize a 32-bit floating-point value into a 16-bit fixed-point value (int16) or an 8-bit fixed-point value (int8). The quantization unit may also quantize a 16-bit floating-point value into a 16-bit fixed-point value or an 8-bit fixed-point value. According to Equation (1), a 16-bit floating-point value may be quantized to an 8-bit fixed-point value by Equation (2):

$$quant\_int8(value\_f, max\_value) = \frac{value\_f \times 127}{max\_value} \qquad \text{Equation (2)}$$

where *quant int8* represents an 8-bit fixed-point value obtained by quantization, *max value* represents a maximum/minimum value corresponding to a 16-bit floating-point value, and *int max* represents a target maximum value corresponding to an 8-bit fixed-point value, which is 127.

In embodiments of the present disclosure, the dequantization may be performed according to the fixed-point value obtained by quantization, the target maximum value corresponding to the fixed-point value, and the maximum/minimum value corresponding to the floating-point value used in quantization, so as to obtain a floating-point value. For example, a fixed-point value may be dequantized to a floating-point value by Equation (3):

$$dequant\_value = \frac{max_{value}\_general \times quant\_value}{int\_max} \qquad \text{Equation (3)}$$

where *dequant value* represents a floating-point value obtained by dequantization, and *quant value* represents a fixed-point value obtained by quantization. As shown in FIG. 3, the quantization unit may dequantize a 16-bit fixed-point value into a 32-bit floating-point value or a 16-bit floating-point value. The quantization unit may also dequantize an 8-bit fixed-point value into a 32-bit floating-point value or a 16-bit floating-point value.

It may be understood that the quantization and dequantization methods of the present disclosure have been described above, and the apparatus of the present disclosure will be further described below.

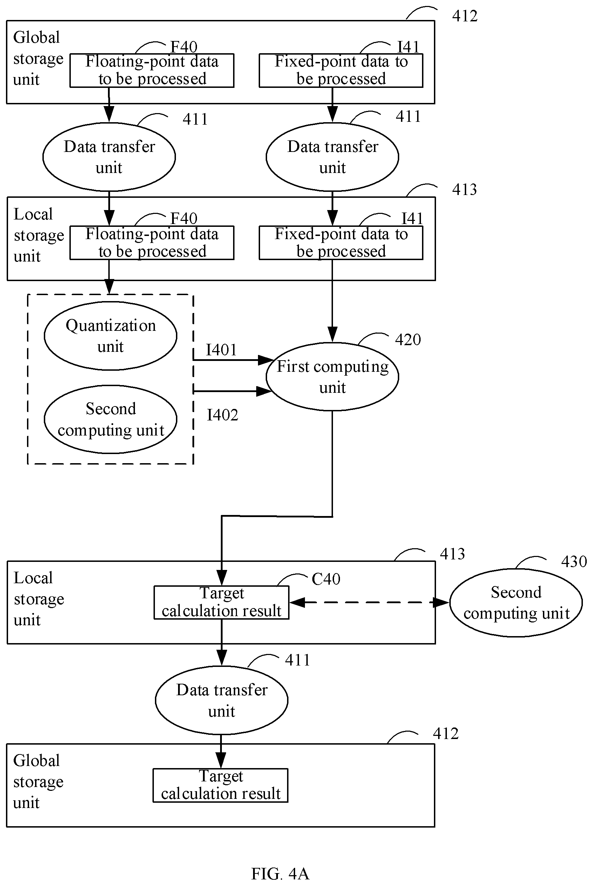

FIG. 4A shows a schematic block diagram of a data processing apparatus according to another embodiment of the present disclosure.

As shown in FIG. 4A, the data processing apparatus may include a quantization unit 410, a first computing unit 420, a second computing unit 430, a global storage unit 412, and a local storage unit 413. It may be understood that the above description of the quantization unit 210 and the first computing unit 220 is also applicable to the quantization unit 410 and the first computing unit 420, which will not be repeated here. The above description of the elementwise processing unit 130, the global storage unit 112 and the local storage unit 113 is also applicable to the second computing unit 430, the global storage unit 412 and the local storage unit 413, which will not be repeated here.

In some embodiments, the quantization unit may be integrated with a data transfer unit. For example, a data transfer unit 410 may be the direct memory access unit in the chip. Through embodiments of the present disclosure, the quantization unit is integrated with the data transfer unit, so that quantization may be performed during data transfer, thereby improving a computing efficiency of the chip.

In some embodiments, the data transfer unit may be used to transfer the floating-point data to be processed from the global storage unit to the local storage unit, so as to cause the quantization unit to quantize the floating-point data to be processed into the first fixed-point data. As shown in FIG. 4A, the data transfer unit 411 may read floating-point data to be processed F40 and fixed-point data to be processed I41 from the global storage unit 412, and store the floating-point data to be processed F40 and the fixed-point data to be processed I41 into the local storage unit 413. Through embodiments of the present disclosure, by transferring data to the local storage unit, an efficiency of the quantization unit in processing floating-point data may be improved, and storage resources of the chip may be fully utilized.

In embodiments of the present disclosure, the floating-point data to be processed F40 may include at least one floating-point value to be processed. The quantization unit 410 may correspond to a target precision, and a maximum value representable by the target precision is a target maximum value. The target precision may be a precision of the quantized fixed-point value supported by the quantization unit 410. For example, if the target precision is a precision of an 8-bit fixed-point value, the target maximum value is a maximum value representable by an 8-bit fixed-point value, which is 127.

In embodiments of the present disclosure, as described above, the quantization unit may quantize a 16-bit floating-point value into an 8-bit fixed-point value, but this may result in a loss of data precision. If the 16-bit floating-point value is quantized to a higher-precision fixed-point value, the loss of precision may be reduced. In addition, the quantization unit may be used to quantize a floating-point value into a plurality of fixed-point values, so as to achieve a higher-precision quantization using a combination of the plurality of fixed-point values. For example, two 8-bit fixed-point values have the same sign bit, and the two 8-bit fixed-point values may share a sign bit. Therefore, two 8-bit fixed-point values may be combined into a 15-bit fixed-point value (INT15). For another example, according to Equation (1), a 16-bit floating-point value may be quantized into a 15-bit fixed-point value by Equation (4):

$$quant\_int15(value\_f, max\_value) = \frac{value\_f \times 16383}{max\_value} \qquad \text{Equation} \quad (4)$$

where *quant int15* represents a 15-bit fixed-point value obtained by quantization, 16383 may be a maximum value representable by a 15-bit fixed-point value, and *max value* represents a maximum/minimum value corresponding to floating-point data to be processed.

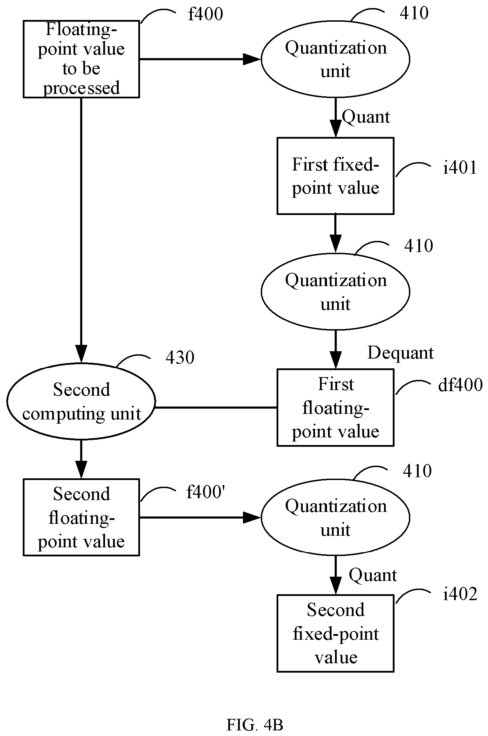

It may be understood that the above-mentioned quantization unit may quantize a 16-bit floating-point value into an 8-bit fixed-point value, but it is difficult to directly quantize a 16-bit floating-point value into a 15-bit floating-point value. In order to make full use of a quantization capability of the quantization unit and reduce hardware modifications, it is possible to quantize a 16-bit floating-point value into two 8-bit fixed-point values. As shown in FIG. 4A, based on the quantization unit 410 and the second computing unit 430, the floating-point data to be processed F40 may be quantized into first fixed-point data I401 and second fixed-point data I402, which will be described below with reference to FIG. 4B.

FIG. 4B shows a schematic diagram of a quantization unit and a second computing unit according to an embodiment of the present disclosure.

In some embodiments, the quantization unit may be used to quantize floating-point data to be processed into first fixed-point data according to a first maximum/minimum value corresponding to the floating-point data to be processed.

In embodiments of the present disclosure, quantization may be performed according to the floating-point data to be processed, the target maximum value and the first maximum/minimum value to obtain the first fixed-point data.

In embodiments of the present disclosure, the first fixed-point data may include at least one first fixed-point value.

In embodiments of the present disclosure, the first maximum/minimum value may be determined by: multiplying a maximum/minimum value to be processed, the target maximum value and a valid parameter value to obtain a first product result; and dividing the first product result by a predetermined maximum/minimum value to obtain the first maximum/minimum value. The maximum/minimum value to be processed may be a predetermined value, or may be a maximum/minimum value in at least one floating-point value to be processed. The valid parameter value may be determined according to the number of valid bits corresponding to the target precision. For example, the target maximum value may be 127. The target precision may be a precision of an 8-bit fixed-point number. An 8-bit fixed-point number may include a sign bit and 7 valid bits. Thus, the valid parameter value may be 128. The predetermined maximum/minimum value may be a maximum value representable by a predetermined precision. In a case that the predetermined precision is a precision of a 15-bit fixed-point value, the predetermined maximum/minimum value may be 16383. It may be understood that the first fixed-point value may be an 8-bit fixed-point value, which may be used as a high-order fixed-point component of the above-mentioned 15-bit fixed-point value. A change of 1 in the high-order fixed-point component may cause the 15-bit fixed-point value to change by $2^7$ times (128 times). Thus, the valid parameter value may be related to the number of valid bits of the target precision.

In embodiments of the present disclosure, the quantization unit is further used to perform the following operations to quantize the floating-point data to be processed into first fixed-point data according to the first maximum/minimum value corresponding to the floating-point data to be processed: multiplying the floating-point value to be processed by the target maximum value to obtain a first product result to be processed; and dividing the first product result to be processed by the first maximum/minimum value so as to quantize the floating-point value to be processed into a first fixed-point value. For example, the floating-point value to be processed may be quantized into the first fixed-point value by Equation (5):

$$quant\_int15\_high = \frac{value\_f \times 16383}{max\_value \times 128} = \frac{value\_f \times 127 \times 129}{max\_value \times 128}$$

$$= quant\_int8\left(value\_f, max\_value \times \frac{16256}{16383}\right) \qquad \text{Equation (5)}$$

where *quant_int15_high* represents a first fixed-point value, $max\_value\ 15 \times \dfrac{16256}{16383}$ represents a first maximum/minimum value, and *quant_int*8( ) indicates quantizing a 16-bit floating-point number to an 8-bit floating-point number. As shown in Equation (5), according to the first maximum/minimum value, an original capability of the quantization unit 410 to quantize a 16-bit floating-point number into an 8-bit floating-point number may be fully utilized. As shown in FIG. 4B, based on Equation (5), the quantization unit 410 may quantize a floating-point value to be processed f400 of the floating-point data to be processed f40 into a first fixed-point value i401.

In some embodiments, the quantization unit may be further used to: dequantize the first fixed-point data to obtain first floating-point data. The first floating-point data may include at least one first floating-point value. As shown in FIG. 4B, by using Equation (3), the quantization unit 410 may dequantize the first fixed-point value I401 into a first floating-point value df400 according to the first maximum/minimum value or the maximum/minimum value to be processed.

In some embodiments, the second computing unit may be used to: subtract the first floating-point data from the floating-point data to be processed to obtain second floating-point data. The second floating-point data may include at least one second floating-point value. As shown in FIG. 4B, the second computing unit 430 may subtract the first floating-point value df400 from the floating-point value to be processed f400 to obtain a second floating-point value f400'.

In some embodiments, the second computing unit may be further used to provide the second floating-point value to the quantization unit. As shown in FIG. 4B, the second computing unit 420 may provide the second floating-point value to the quantization unit 410.

In some embodiments, the quantization unit may be further used to: quantize the second floating-point data into second fixed-point data according to a second maximum/minimum value corresponding to the floating-point data to be processed.

In embodiments of the present disclosure, the second fixed-point data may include at least one second fixed-point value.

In embodiments of the present disclosure, the second maximum/minimum value may be determined by: multiplying the maximum/minimum value to be processed by the target maximum value to obtain a second product result; and dividing the second product result by a predetermined maximum/minimum value to obtain the second maximum/minimum value.

In embodiments of the present disclosure, the quantization unit may be further used to: multiply the second floating-point value by the target maximum value to obtain a second product result to be processed; and dividing the second product result to be processed by the second maximum/minimum value so as to quantize the floating-point value to be processed into the second fixed-point value. For example, the second floating-point value may be quantized to the second fixed-point value by Equation (6):

$$quant\_int15\_low = \frac{(value\_f - valuie\_f\_high) \times 16383}{max\_value \times 127}$$

$$= quant\_int8\left(valuie\_f - valuie\_f\_high, max\_value \times \frac{127}{16383}\right) \qquad \text{Equation} \quad (6)$$

where *quant int15_low* represents a second fixed-point value, which may be used as a low-order fixed-point component of a 15-bit floating-point value, *value _.f* represents a floating-point value to be processed, *value _.f high* represents a first floating-point value, *(value _.f-value _.f high)* represents a second floating-point value, and

$$\max\_value \times \frac{127}{16383}$$

represents a second maximum/minimum value. As shown in FIG. 4B, according to Equation (6), the quantization unit 410 may quantize the second floating-point value df400 into a second fixed-point value i402.

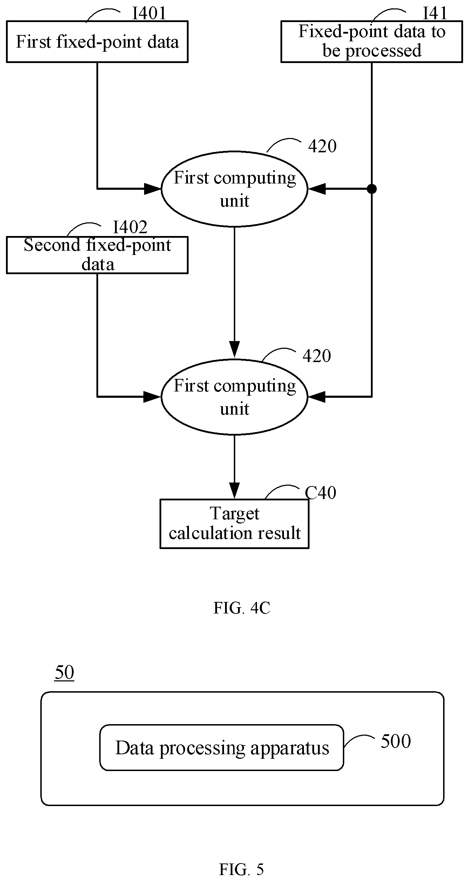

As shown in FIG. 4A, after quantization of one or more floating-point values to be processed of the floating-point data to be processed F40 is completed, first fixed-point data I401 and second fixed-point data I402 may be obtained. The first fixed-point data I401 and the second fixed-point data I402 may be provided to the first computing unit 420. The first computing unit 420 may perform relevant operations according to the fixed-point data to be processed I41, the first fixed-point data I401 and the second fixed-point data I402, which will be described below with reference to FIG. 4C.

FIG. 4C shows a schematic diagram of a first computing unit according to an embodiment of the present disclosure.

In some embodiments, the first computing unit may be used to obtain a first calculation result according to the fixed-point data to be processed and the first fixed-point data. As shown in FIG. 4C, the first computing unit 410 may multiply the fixed-point data to be processed I41 by the first fixed-point data I401 to obtain the first calculation result.

In some embodiments, the first computing unit may be used to obtain a second calculation result according to the fixed-point data to be processed and the second fixed-point data. As shown in FIG. 4C, the first computing unit 410 may multiply the fixed-point data to be processed I41 by the second fixed-point data I402 to obtain the second calculation result.

In some embodiments, the first computing unit may be used to obtain a target calculation result according to the first calculation result and the second calculation result. As shown in FIG. 4C, the first computing unit 410 may add the first calculation result and the second calculation result to obtain a target calculation result C40.

It may be understood that the present disclosure has been described above by taking the floating-point value to be processed as a 16-bit floating-point value as an example. However, the present disclosure is not limited thereto, and the floating-point value to be processed may also be a 32-bit floating-point value, and the corresponding first fixed-point value and second fixed-point value may be 16-bit fixed-point values.

It may be understood that the apparatus of the present disclosure has been described above, and an electronic device including the apparatus will be described below.

FIG. 5 shows a schematic block diagram of an electronic device according to an embodiment of the present disclosure.

As shown in FIG. 5, a device 50 may include a data processing apparatus 500. The data processing apparatus 500 may be the data processing apparatus 200 described above.

It may be understood that the apparatus and device of the present disclosure have been described above, and the method of the present disclosure will be described below.

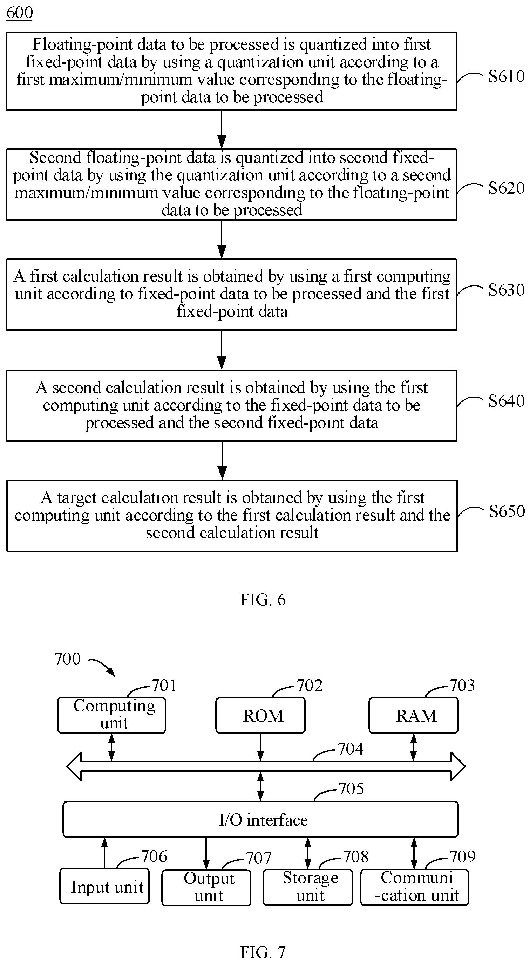

FIG. 6 shows a flowchart of a data processing method according to an embodiment of the present disclosure.

As shown in FIG. 6, a data processing method 600 of the present disclosure may include operation S610 to operation S650.

In operation S610, floating-point data to be processed is quantized into first fixed-point data by using a quantization unit according to a first maximum/minimum value corresponding to the floating-point data to be processed.

In operation S620, second floating-point data is quantized into second fixed-point data by using the quantization unit according to a second maximum/minimum value corresponding to the floating-point data to be processed. The second floating-point data is obtained according to the floating-point data to be processed and first floating-point data, and the first floating-point data is obtained by dequantizing the first fixed-point data.

In operation S630, a first calculation result is obtained by using a first computing unit according to fixed-point data to be processed and the first fixed-point data.

In operation S640, a second calculation result is obtained by using the first computing unit according to the fixed-point data to be processed and the second fixed-point data.

In operation S650, a target calculation result is obtained by using the first computing unit according to the first calculation result and the second calculation result.

For example, the method 600 may be performed by the above-mentioned data processing apparatus 200.

In embodiments of the present disclosure, the method further includes: subtracting the first floating-point data from the floating-point data to be processed by using a second computing unit to obtain second floating-point data; and providing the second floating-point data to the quantization unit by using the second computing unit.

In embodiments of the present disclosure, the floating-point data to be processed includes at least one floating-point value to be processed, the quantization unit corresponds to a target precision, and a maximum value representable by the target precision is a target maximum value.

In embodiments of the present disclosure, the method further includes: multiplying a maximum/minimum value to be processed, the target maximum value and a valid parameter value to obtain a first product result, where the maximum/minimum value to be processed is a predetermined value or a maximum/minimum value in the at least one floating-point value to be processed, and the valid parameter value is determined according to the number of valid bits corresponding to the target precision; and dividing the first product result by a predetermined maximum/minimum value to obtain a first maximum/minimum value.

In embodiments of the present disclosure, the first fixed-point data includes at least one first fixed-point value. Quantizing the floating-point data to be processed into the first fixed-point data by using the quantization unit according to the first maximum/minimum value corresponding to the floating-point data to be processed includes: multiplying the floating-point value to be processed by the target maximum value to obtain a first product result to be processed; and dividing the first product result to be processed by the first maximum/minimum value so as to quantize the floating-point value to be processed into a first fixed-point value.

In embodiments of the present disclosure, the method further includes: multiplying the maximum/minimum value to be processed by the target maximum value to obtain a second product result, where the maximum/minimum value to be processed is a maximum/minimum value in the at least one floating-point value to be processed or a predetermined value; and dividing the second product result by the predetermined maximum/minimum value to obtain a second maximum/minimum value.

In embodiments of the present disclosure, the first floating-point data includes at least one first floating-point value, the second floating-point data includes at least one second floating-point value, and the second fixed-point data includes at least one second fixed-point value. Quantizing the second floating-point data into the second fixed-point data by using the quantization unit according to the second maximum/minimum value corresponding to the floating-point data to be processed includes: multiplying the second floating-point value by the target maximum value to obtain a second product result to be processed; and dividing the second product result to be processed by the second maximum/minimum value so as to quantize the floating-point value to be processed into a second fixed-point value.

In embodiments of the present disclosure, the quantization unit is integrated with a data transfer unit.

In embodiments of the present disclosure, the method further includes: transferring the floating-point data to be processed from the global storage unit to the local storage unit by using the data transfer unit, so as to cause the quantization unit to quantize the floating-point data to be processed into first fixed-point data.

In technical solutions of the present disclosure, a collection, a storage, a use, a processing, a transmission, a provision, a disclosure and other processing of user personal information involved comply with provisions of relevant laws and regulations and do not violate public order and good custom.

According to embodiments of the present disclosure, the present disclosure further provides an electronic device, a readable storage medium, and a computer program product.

FIG. 7 shows a schematic block diagram of an exemplary electronic device 700 suitable for implementing embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 7, the electronic device 700 includes a computing unit 701 which may perform various appropriate actions and processes according to a computer program stored in a read only memory (ROM) 702 or a computer program loaded from a storage unit 708 into a random access memory (RAM) 703. In the RAM 703, various programs and data necessary for an operation of the electronic device 700 may also be stored. The computing unit 701, the ROM 702 and the RAM 703 are connected to each other through a bus 704. An input/output (I/O) interface 705 is also connected to the bus 704.

A plurality of components in the electronic device 700 are connected to the I/O interface 705, including: an input unit 706, such as a keyboard, or a mouse; an output unit 707, such as displays or speakers of various types; a storage unit 708, such as a disk, or an optical disc; and a communication unit 709, such as a network card, a modem, or a wireless communication transceiver. The communication unit 709 allows the electronic device 700 to exchange information/data with other devices through a computer network such as Internet and/or various telecommunication networks.

The computing unit 701 may be various general-purpose and/or dedicated processing assemblies having processing and computing capabilities. Some examples of the computing units 701 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 701 executes various methods and processes described above, such as the data processing method. For example, in some embodiments, the data processing method may be implemented as a computer software program which is tangibly embodied in a machine-readable medium, such as the storage unit 708. In some embodiments, the computer program may be partially or entirely loaded and/or installed in the electronic device 700 via the ROM 702 and/or the communication unit 709. The computer program, when loaded in the RAM 703 and executed by the computing unit 701, may execute one or more steps in the data processing method described above. Alternatively, in other embodiments, the computing unit 701 may be used to perform the data processing method by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the method of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with the user. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. A relationship between the client and the server is generated through computer programs running on the corresponding computers and having a client-server relationship with each other.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

**Claims**

1. A data processing apparatus (200, 500), comprising:

   a quantization unit (210, 410) configured to:

   quantize floating-point data to be processed into first fixed-point data according to a first maximum/minimum value corresponding to the floating-point data to be processed; and
   quantize second floating-point data into second fixed-point data according to a second maximum/minimum value corresponding to the floating-point data to be processed, wherein the second floating-point data is obtained according to the floating-point data to be processed and first floating-point data, and the first floating-point data is obtained by dequantizing the first fixed-point data; and

   a first computing unit (220, 420) configured to:

   obtain a first calculation result according to fixed-point data to be processed and the first fixed-point data;
   obtain a second calculation result according to the fixed-point data to be processed and the second fixed-point data; and

obtain a target calculation result according to the first calculation result and the second calculation result.

2. The apparatus according to claim 1, further comprising a second computing unit (430) configured to:

subtract the first floating-point data from the floating-point data to be processed to obtain the second floating-point data; and
provide the second floating-point data to the quantization unit (210, 410).

3. The apparatus according to claim 1, wherein the floating-point data to be processed comprises at least one floating-point value to be processed, the quantization unit (210, 410) corresponds to a target precision, and a maximum value representable by the target precision is a target maximum value.

4. The apparatus according to claim 3, wherein the first maximum/minimum value is determined by:

multiplying a maximum/minimum value to be processed, the target maximum value and a valid parameter value to obtain a first product result, wherein the maximum/minimum value to be processed is a maximum/minimum value of the at least one floating-point value to be processed, or the maximum/minimum value to be processed is a predetermined value, and the valid parameter value is determined according to a number of valid bits corresponding to the target precision; and
dividing the first product result by a predetermined maximum/minimum value to obtain the first maximum/minimum value; and optionally
the first fixed-point data comprises at least one first fixed-point value; and
wherein the quantization unit (210, 410) is further configured to perform an operation to quantize the floating-point data to be processed into the first fixed-point data according to the first maximum/minimum value corresponding to the floating-point data to be processed, and the operation comprises:

multiplying the floating-point value to be processed and the target maximum value to obtain a first product result to be processed; and
dividing the first product result to be processed by the first maximum/minimum value to quantize the floating-point value to be processed into the first fixed-point value.

5. The apparatus according to claim 3, wherein the second maximum/minimum value is determined by:

multiplying a maximum/minimum value to be processed and the target maximum value to obtain a second product result, wherein the maximum/minimum value to be processed is a maximum/minimum value of the at least one floating-point value to be processed, or the maximum/minimum value to be processed is a predetermined value; and
dividing the second product result by a predetermined maximum/minimum value to obtain the second maximum/minimum value; and optionally
the first floating-point data comprises at least one first floating-point value, the second floating-point data comprises at least one second floating-point value, and the second fixed-point data comprises at least one second fixed-point value; and
wherein the quantization unit (210, 410) is further configured to perform an operation to quantize the second floating-point data into the second fixed-point data according to the second maximum/minimum value corresponding to the floating-point data to be processed, and the operation comprises:

multiplying the second floating-point value and the target maximum value to obtain a second product result to be processed; and
dividing the second product result to be processed by the second maximum/minimum value to quantize the second floating-point value into the second fixed-point value.

6. The apparatus according to claim 1, wherein the quantization unit (210, 410) is integrated with a data transfer unit (411); and optionally
the data transfer unit (411) is configured to:
transfer the floating-point data to be processed from a global storage unit (412) to a local storage unit (413), so as to cause the quantization unit (210, 410) to quantize the floating-point data to be processed into the first fixed-point data.

7. An electronic device, comprising the apparatus of any one of claims 1 to 6.

8. A data processing method (600), comprising:

    quantizing (S610), by using a quantization unit, floating-point data to be processed into first fixed-point data according to a first maximum/minimum value corresponding to the floating-point data to be processed;

    quantizing (S620), by using the quantization unit, second floating-point data into second fixed-point data according to a second maximum/minimum value corresponding to the floating-point data to be processed, wherein the second floating-point data is obtained according to the floating-point data to be processed and first floating-point data, and the first floating-point data is obtained by dequantizing the first fixed-point data;

    obtaining (S630) a first calculation result according to fixed-point data to be processed and the first fixed-point data by using a first computing unit;

    obtaining (S640) a second calculation result according to the fixed-point data to be processed and the second fixed-point data by using the first computing unit; and

    obtaining (S650) a target calculation result according to the first calculation result and the second calculation result by using the first computing unit.

9. The method according to claim 8, further comprising:

    subtracting, by using a second computing unit, the first floating-point data from the floating-point data to be processed to obtain the second floating-point data; and

    providing the second floating-point data to the quantization unit by using the second computing unit.

10. The method according to claim 8, wherein the floating-point data to be processed comprises at least one floating-point value to be processed, the quantization unit corresponds to a target precision, and a maximum value representable by the target precision is a target maximum value.

11. The method according to claim 10, wherein the first maximum/minimum value is determined by:

    multiplying a maximum/minimum value to be processed, the target maximum value and a valid parameter value to obtain a first product result, wherein the maximum/minimum value to be processed is a maximum/minimum value of the at least one floating-point value to be processed, or the maximum/minimum value to be processed is a predetermined value, and the valid parameter value is determined according to a number of valid bits corresponding to the target precision; and

    dividing the first product result by a predetermined maximum/minimum value to obtain the first maximum/minimum value; and optionally

    the first fixed-point data comprises at least one first fixed-point value; and

    wherein the quantizing, by using a quantization unit, floating-point data to be processed into first fixed-point data according to a first maximum/minimum value corresponding to the floating-point data to be processed comprises:

        multiplying the floating-point value to be processed and the target maximum value to obtain a first product result to be processed; and

        dividing the first product result to be processed by the first maximum/minimum value to quantize the floating-point value to be processed into the first fixed-point value.

12. The method according to claim 10, wherein the second maximum/minimum value is determined by:

    multiplying a maximum/minimum value to be processed and the target maximum value to obtain a second product result, wherein the maximum/minimum value to be processed is a maximum/minimum value of the at least one floating-point value to be processed, or the maximum/minimum value to be processed is a predetermined value; and

    dividing the second product result by a predetermined maximum/minimum value to obtain the second maximum/minimum value; and optionally

    the first floating-point data comprises at least one first floating-point value, the second floating-point data comprises at least one second floating-point value, and the second fixed-point data comprises at least one second fixed-point value; and

    wherein the quantizing, by using the quantization unit, second floating-point data into second fixed-point data according to a second maximum/minimum value corresponding to the floating-point data to be processed comprises:

multiplying the second floating-point value and the target maximum value to obtain a second product result to be processed; and

dividing the second product result to be processed by the second maximum/minimum value to quantize the second floating-point value into the second fixed-point value.

13. The method according to claim 8, wherein the quantization unit is integrated with a data transfer unit; and optionally the method further comprises:

transferring the floating-point data to be processed from a global storage unit to a local storage unit by using the data transfer unit, so as to cause the quantization unit to quantize the floating-point data to be processed into the first fixed-point data.

14. A non-transitory computer-readable storage medium having computer instructions therein, wherein the computer instructions are configured to cause a computer to implement the method of any one of claims 8 to 13.

15. A computer program product containing a computer program, wherein the computer program, when executed by a processor, is configured to cause the processor to implement the method of any one of claims 8 to 13.

FIG. 1A

FIG. 1B

112

Global storage unit

A10

Input matrix (FP16)

B11

Input matrix (INT8)

111

Direct memory access unit

111

Direct memory access unit

113

Local storage unit

qA10

Input matrix (INT8)

B11

Input matrix (INT8)

120

Multiply accumulate unit

113

Local storage unit

C10

Output result matrix

130

Elementwise processing unit

111

Direct memory access unit

112

Global storage unit

Output result matrix

FIG. 1C

Global storage unit A10 — Input matrix (FP16) B11 — Input matrix (INT8) — 112

↓ Direct memory access unit — 111    ↓ Direct memory access unit — 111

Local storage unit A10 — Input matrix (FP16) dB11 — Input matrix (INT8) — 113

Multiply accumulate unit — 120

Local storage unit C10 — Output result matrix — 113    Elementwise processing unit — 130

Direct memory access unit — 111

Global storage unit — Output result matrix — 112

FIG. 1D

200

Quantization unit — 210

First computing unit — 220

FIG. 2

| Data type | FP32 | FP16 | INT16 | INT8 |
|---|---|---|---|---|
| FP32 | copy | cast | quant | quant |
| FP16 | cast | copy | quant | quant |
| INT16 | dequant | dequant | copy | -- |
| INT8 | dequant | dequant | -- | copy |

FIG. 3

FIG. 4A

FIG. 4B

I401

First fixed-point data

I41

Fixed-point data to be processed

420

First computing unit

I402

Second fixed-point data

420

First computing unit

C40

Target calculation result

FIG. 4C

50

Data processing apparatus

500

FIG. 5

600

| Floating-point data to be processed is quantized into first fixed-point data by using a quantization unit according to a first maximum/minimum value corresponding to the floating-point data to be processed | S610 |

↓

| Second floating-point data is quantized into second fixed-point data by using the quantization unit according to a second maximum/minimum value corresponding to the floating-point data to be processed | S620 |

↓

| A first calculation result is obtained by using a first computing unit according to fixed-point data to be processed and the first fixed-point data | S630 |

↓

| A second calculation result is obtained by using the first computing unit according to the fixed-point data to be processed and the second fixed-point data | S640 |

↓

| A target calculation result is obtained by using the first computing unit according to the first calculation result and the second calculation result | S650 |

FIG. 6

700

701 Computing unit
702 ROM
703 RAM

704

705

I/O interface

706 Input unit
707 Output unit
708 Storage unit
709 Communi-cation unit

FIG. 7